# EUROPÄISCHE PATENTSCHRIFT

(11) **EP 2 354 108 B1**
(45) Veröffentlichungstag und Bekanntmachung des Hinweises auf die Patenterteilung: **20.04.2016**
(21) Anmeldenummer: 10000845.7
(22) Anmeldetag: 28.01.2010
(51) Int. Cl.: C04B 28/14, C04B 111/00, C04B 111/20, C04B 28/08

(54) **BINDEMITTELZUSAMMENSETZUNG FÜR PHOTOKATALYTISCH AKTIVE BAUTEILE UND BESCHICHTUNGEN**
BINDING AGENT COMPOUND FOR PHOTOCATALYTICALLY ACTIVE COMPONENTS AND COATINGS
COMPOSITION DE LIANT POUR COMPOSANTS ACTIFS PHOTO-CATALYTIQUES ET REVÊTEMENTS

(43) Veröffentlichungstag der Anmeldung: 10.08.2011
(73) Patentinhaber: HeidelbergCement AG, 69120 Heidelberg (DE)
(72) Erfinder: Bolte, Gerd, 69198 Schriesheim (DE); Ludwig, Horst-Michael, Dr., 96317 Kronach (DE)
(74) Vertreter: Wagner, Jutta

(56) Entgegenhaltungen:
- EP-A1- 0 919 667
- EP-A1- 1 652 827
- JP-A- 2000 117 117

## Beschreibung

Die vorliegende Erfindung betrifft hydraulische Bindemittel zur Herstellung photokatalytisch aktiver Bauteile oder Beschichtungen.

Selbstreinigende Oberflächen sind in jüngerer Vergangenheit zunehmend Gegenstand der Forschung geworden. Das wohl bekannteste Beispiel dafür ist der so genannte "Lotus-Effekt", bei dem Verunreinigungen durch Regenwasser von einer nicht benetzbaren Oberfläche abgewaschen werden.

Ein noch weiter reichender Ansatz beschäftigt sich mit schadstoffzersetzenden Oberflächen. Hierbei soll die Verunreinigung durch eine chemische Reaktion zersetzt werden. Geeignet dafür ist die so genannte Photokatalyse, bei der die chemische Reaktion durch Sonnenlicht als Energielieferant in Verbindung mit einem Katalysator ausgelöst wird.

Als photoaktiver Katalysator kommen eine Reihe von Verbindungen in Frage. Als besonders geeignet hat sich Titandioxid erwiesen. Titandioxid liegt in drei Modifikationen vor, die sich hinsichtlich Kristallstruktur und Eigenschaften unterscheiden: Rutil, Anatas und Brookit. Photokatalytisch aktiv sind Rutil und Anatas. Der photokatalytische Effekt tritt bei Titandioxiden mit einer Kristallitgröße im Nanometer Bereich beim Auftreffen von Lichtstrahlung der Wellenlänge < 410 nm ein. Als am stärksten photoaktiv wird in der Literatur zumeist die Modifikation Anatas bezeichnet. Die gängigste Variante Rutil wurde bisher vor allem als Weißpigment in z.B. Farben eingesetzt, allerdings mit gecoateter Oberfläche, um so eine photokatalytische Aktivität zu unterbinden. Neben der hierbei genutzten aufhellenden Funktion gewinnt nun die photokatalytische Eigenschaft des Titandioxids immer mehr an Bedeutung.

Die Photokatalyse initiiert eine Reaktion des auf der Oberfläche adsorbierten Wasser mit Sauerstoff. Dabei entstehen hochreaktive Radikale, die mit den umgebenden Stoffen reagieren.

Außer der indirekten Reaktion der Stoffe in der Umgebung mit diesen Radikalen ist auch eine direkte Oxidation der an der Oberfläche des Photokatalysators adsorbierten Stoffe möglich.

Die Oberflächenchemie des Titandioxides bewirkt zudem, dass sich der Kontaktwinkel des an der Oberfläche anhaftenden Wassers infolge der Lichteinwirkung ändert. Titandioxid-beschichtete Oberflächen werden bei Bestrahlung ultrahydrophil. Wird die Bestrahlung unterbrochen, bildet sich die normale hydrophobe Oberfläche langsam zurück. Bei erneuter Bestrahlung erlangt die Oberfläche wieder ihre ultrahydrophile Eigenschaft. Applikationen, die dieses Verhalten nutzen, findet man bereits in Bereichen wie selbstreinigende Zeltstoffe oder so genannter antifogging Beschichtungen auf Glas.

Mit Hilfe der Photokatalyse können Luftschadstoffe, wie z.B. Stickstoffmonoxid und Stickstoffdioxid oder organische Gase oxidiert und damit unschädlich gemacht werden.

Auch die ästhetischen Anforderungen, die an eine Betonoberfläche eines Bauteiles gestellt werden, können durch den Einsatz eines Photokatalysators über einen längeren Zeitraum erfüllt werden. Bei der Bestrahlung der Flächen mit Licht wird die Zersetzung der Schmutzmoleküle beschleunigt, wodurch das Bauteil seine ursprüngliche Farbe behält. Diese Zersetzung findet von Natur aus auch ohne Katalysator statt, jedoch so langsam, dass ein Verschmutzen der Oberflächen nicht verhindert werden kann.

Erste Versuche zeigten eine vergleichsweise geringe Wirksamkeit des Titandioxides beim Einsatz in zementgebundenen Systemen. Auch in der Literatur fanden sich Hinweise, dass bei Verwendung von Gips als Trägermaterial eine aufgebrachte Verunreinigung nach wenigen Stunden verschwindet, bei einem zementgebundenen System fand diese Entfärbung wesentlich langsamer statt.

Vorschläge zum Thema Photokatalyse in zementgebundenen Systemen finden sich u.a. in WO 98/05601, WO 01/00541, EP 885 857, EP 1 405 835, WO 2004/074202, EP 786 283 und EP 919 667.

WO 98/05601 beschreibt ganz allgemein Gemische bei denen Zement nach EN 197 als Bindemittel und Titandioxid, bevorzugt Anatas, als Photokatalysator eingesetzt wird.

In EP 1 405 835 wird eine photokatalytische Granulatmischung zum Einsatz in zementgebundenen Systemen beschrieben, in der durch die Abmischung zweier unterschiedlich feiner Titandioxidpulver eine Verbesserung der katalytischen Aktivität erzielt wurde.

Die WO 2004/074202 beschreibt die Verwendung von Titandioxidhaltigem Zement als Vorsatzbetonschicht auf Pflastersteinen.

Aus EP 1 652 827 A1 ist ein Entgiftungs-System für geschlossene Räume bekannt, welches eine Lichtquelle und eine Oberfläche umfasst, wobei die Oberfläche eine Abdeckung umfassend Titandioxidpartikel als Photokatalysator und ein hydraulisches Bindemittel ausgewählt aus Zementen und Silikonzusammensetzungen aufweist. Als Bindemittel wird Portlandzement bevorzugt, außerdem sollen Portlandkompositzemente enthaltend Schlacke, Flugasche und Silikastaub, Schlackenzemente, Calciumaluminatzement u.a. brauchbar sein.

Die bisherigen Ansätze konnten aber das Problem der geringeren photokatalytischen Aktivität der zementgebundenen Systeme gegenüber anderen Baustoffen noch nicht vollständig lösen.

Überraschend wurde nun gefunden, dass bei Einsatz eines Sulfathüttenzementes die Wirksamkeit des Titandioxid, d.h. die photokatalytische Aktivität, erheblich gesteigert werden kann.

Das obige Problem wird daher gelöst durch eine hydraulische Bindemittelzusammensetzung enthaltend 75 bis 95 Gew.-% Hüttensand, 5 bis 20 Gew.-% Calciumsulfat, 0,5 bis 4,5 Gew.-% Portlandzementklinker und 0,1 bis 5 Gew.-% photokatalytisch aktives Titandioxid. Es versteht sich, dass die Summe aller Komponenten, einschließlich etwaiger weiterer Komponenten wie z.B. Zusatzmittel und Zusatzstoffe, stets 100 Gew% beträgt.

Solche Bindemittelzusammensetzungen eignen sich zur Herstellung von Bauteilen oder Beschichtungen mit photokatalytisch aktiver Oberfläche. Die Oberflächen sind damit in der Lage effektiver als vergleichbare Oberflächen aus Zementen nach EN 197 Luftschadstoffe wie z.B. NOₓ aus der Luft abzubauen.

Die erfindungsgemäßen Bindemittelzusammensetzungen sind besonders geeignet für dünnwandige Applikationen wodurch der Wirkungsgrad des Titan-dioxides deutlich verbessert wird, z.B. Beschichtungsmassen.

Anfang des 20. Jahrhunderts wurde das als Sulfathüttenzement bezeichnete Bindemittel entwickelt. Nach der ab 1937 in der damaligen DIN 4210 enthaltenen Normierung musste Sulfathüttenzement zumindest 75 % Hüttensand, mindestens 3 % Sulfat (berechnet als SO₃) und nicht mehr als 5 % Portlandzement oder alternative alkalische Anreger enthalten. Eine typische Zusammensetzung war 75 bis 85 % Hüttensand, 12 bis 18 % Calciumsulfat und 1 bis 5 % Portlandzement.

Sulfathüttenzement ist ein hüttensandreicher Zement, bei welchem die latent-hydraulischen Eigenschaften nicht alkalisch - wie beim Hochofen- und Eisenportlandzement - sondern sulfatisch angeregt werden. Dadurch unterscheiden sie sich im Erhärtungsverlauf, den Hydratationsprodukten und einigen charakteristischen Eigenschaften im erhärteten Zustand. Während sich zum Beispiel bei Portland- und Hochofenzement Ettringit während der Hydratation nur in geringer Menge bildet, stellt dieses Calciumaluminatsulfathydrat beim Sulfathüttenzement (SCC), neben den ebenfalls gebildeten Calciumsilicathydraten, als Hauptträger für die Festigkeitsentwicklung einen wesentlichen Bestandteil des Zementsteines dar. Während der Portlandzement (CEM I) fast ohne jegliche latenthydraulischen oder puzzolanischen Zumahlstoffe hergestellt wird und selbst CEM III etwa 30 Gew.-% Portlandzementklinker enthalten muss, wird bei der Herstellung des Sulfathüttenzementes (SSC) überhaupt kein oder nur wenige Prozent Portlandzementklinker verwendet. Dadurch ist der Sulfathüttenzement ein ungewöhnlich kalkarmer Zement. Die Tabelle 1 zeigt einen Vergleich der chemischen Zusammensetzung von CEM I, CEM III und SCC.

**Tabelle 1**

| | **CEM I** | **CEM III** | **SSC** |
|---|---|---|---|
| **SiO₂** | 19 - 23 % | 22 - 29 % | 24 - 30 % |
| **Al₂O₃** | 3,0 - 7,0 % | 6,0 - 13 % | 12 - 15 % |
| **Fe₂O₃** | 1,6 - 5,0 % | 1,0 - 4,0 % | 0 - 1,0 % |
| **CaO** | 61 - 67 % | 44 - 63 % | 36 - 46 % |
| **MgO** | 0,6 - 3 % | 1,6 - 6,7 % | 3,0 - 7,0 % |
| **SO₃** | 1,5 - 4,0 % | 1,5 - 4,0 % | 4,0 - 12 % |

Deutlich erkennbar ist, dass der SSC durch die sulfatische Anregung einen gegenüber dem CEM I und CEM III wesentlich höheren SO₃-Gehalt, einen höheren Al₂O₃-Anteil sowie einen deutlich niedrigeren CaO-Gehalt aufweist. Die Zusammensetzung eines hydratisierten SSC unterscheidet sich daher deutlich von einem erhärteten Portlandzementstein. Der hydratisierte SSC besteht überwiegend aus kalkarmen CSH-Phasen, Ettringit sowie gelförmigem Al(OH)₃ und etwas Calciumaluminathydrat (CAH).

Als Hüttensand wird eine rasch abgekühlte Hochofenschlacke bezeichnet. Hochofenschlacken entstehen bei der Eisenerzeugung im Hochofenprozess bei 1.450° bis 1.550° C. Sie bilden sich aus den natürlichen Beimengungen der Erze (Gangart), den auf das Erz abgestimmten Zuschlägen und der Koksasche. Die chemische Zusammensetzung wird so eingestellt, dass eine leicht schmelzbare, dünnflüssige und weitgehend eisenfreie Hochofenschlacke resultiert. Eine langsame Abkühlung der Hochofenschlacke würde zu einem kristallinen Produkt (Stückschlacke) führen, welches keine hydraulischen Eigenschaften aufweist. Je rascher die Hochofenschlacke aus der Schmelze abgekühlt (granuliert) wird, um so besser sind ihre hydraulischen Eigenschaften. Nur diese nichtkristallinen, glasartigen Hochofenschlacken, welche hydraulisch erhärten können, werden als Hüttensand bezeichnet.

Durch Vermischen feingemahlenen Hüttensandes mit feingemahlenem Calciumsulfat und Portlandzement oder durch gemeinsames Vermahlen der Komponenten Hüttensand, Calciumsulfat und Portlandzementklinker entsteht der Sulfathüttenzement als hydraulisch erhärtendes Bindemittel. Im Vergleich zu Portlandzement mit ca. 375 bis 525 J/g (nach 7 Tagen) entwickelt Sulfathüttenzement eine mit ca. 160 bis 220 J/g (nach 7 Tagen) erheblich geringere Hydratationswärme. Ein weiterer Vorteil ist der hohe Sulfatwiderstand des Zementsteins und eine erhöhte Widerstandsfähigkeit gegen chemischen Angriff, wie z.B. durch schwache Säuren.

Ungeachtet dieser Vorteile hatte der Sulfathüttenzement in den siebziger Jahren des 20. Jahrhunderts die Zulassung in Deutschland verloren und war bis vor kurzem in den entsprechenden Normen nicht mehr enthalten. Erst seit Anfang 2009 gibt es mit der Europäischen Norm prEN 15743 wieder einen Standard für Sulfathüttenzemente. Sämtliche der Norm prEN 15743 entsprechenden Sulfathüttenzemente sind erfindungsgemäß brauchbar.

Die erfindungsgemäßen Bindemittelzusammensetzungen enthalten ein Gemisch aus Hüttensand, Calciumsulfat, Portlandzementklinker und Titandioxid als Photokatalysator.

Mit Titandioxid ist im Rahmen der Erfindung photokatalytisch aktives Material gemeint, also Titandioxid in der Rutil oder Anatas Modifikation. Es versteht sich, dass das eingesetzte Material auch Verunreinigungen enthalten kann. Entscheidend ist, dass das Material im wesentlichen, z.B. zu mehr als 80 Gew.-%, bevorzugt zu mehr als 90 Gew.-%, aus photokatalytisch aktivem Titandioxid besteht, also solchem, das mit Licht von Wellenlängen < 410 nm aktivierbar ist.

Vorzugsweise wird das Titandioxid in der Anatas-Form eingesetzt, es eignet sich aber auch die Rutil-Modifikation oder Mischungen aus beiden. Die Kristallitgröße des Titandioxid liegt vorteilhaft im Bereich von 5 bis 200 nm, insbesondere von 10 bis 140 nm.

Der Gehalt an Titandioxid in der Bindemittelzusammensetzung liegt bevorzugt im Bereich von 1 bis 5 Gew.-%, insbesondere von 1 bis 4 Gew.%, ganz besonders bevorzugt von 1 bis 2 Gew.-%.

Für das erfindungsgemäße Bindemittel eignen sich als Hüttensand alle handelsüblichen Hüttensande, welche in Glasgehalt und chemischer Zusammensetzung den in der prEN 15743 beschriebenen Anforderungen genügen. Die erfindungsgemäße Bindemittelzusammensetzung enthält vorzugsweise 75 bis 95 Gew.-% Hüttensand, insbesondere 75 bis 80 Gew.-%.

Als Calciumsulfat können die üblicherweise verwendeten Sulfate wie Anhydrit, Halbhydrat und Dihydrat eingesetzt werden. Der Calciumsulfatanteil, berechnet als Anhydrit, beträgt 5 bis 20 Gew.-%, vorzugsweise von 10 bis 17 Gew.-% und insbesondere von 14 bis 16 Gew.-%. Üblicherweise soll dabei die spezifische Oberfläche des verwendeten Calciumsulfates im Bereich von 4000 bis 6000 cm²/g liegen. Besonders bevorzugt wird Calciumsulfat-Anhydrit als Calcium-sulfatträger eingesetzt.

Der erfindungsgemäß enthaltene Portlandzementklinker dient in bekannter Weise dazu, den Hüttensand anzuregen und den pH-Wert zu erhöhen. Auch hier eignen sich im Prinzip alle bekannten Portlandzementklinker. Anstelle von Portlandzementklinker kann auch Portlandzement verwendet werden. Die üblicherweise in Portlandzement enthaltenen Nebenbestandteile, wie der Anteil an Calciumsulfat und ggfs. ein Anteil an Hüttensand, sind bei der Berechnung des Gehalts der erfindungsgemäßen weiteren Komponenten Hüttensand und Calciumsulfat-Anhydrit einzurechnen und entsprechend bei dem Gehalt an Portlandzementklinker abzuziehen. Vorzugsweise sind 0,5 bis 4,5 %, insbesondere 0,5 bis 3 und ganz besonders bevorzugt 1 bis 2 Gew.-% Portlandzementklinker enthalten.

Besonders bevorzugt werden erfindungsgemäß Bindemittel, deren Grundmischung ohne Titandioxid aus etwa 83 Gew.-% Hüttensand, etwa 15 Gew.-% Calciumsulfat-Anhydrit und etwa 2 Gew.-% Portlandzement zusammengesetzt ist.

Die spezifische Oberfläche des Bindemittels liegt üblicherweise im Bereich von 2500 bis 6000 cm²/g. Die Bindemittelzusammensetzung kann zur weiteren Anregung der Festigkeitsentwicklung Calciumaluminatischen Zement enthalten.

Die Bindemittelzusammensetzung kann in an sich bekannter Weise übliche Zusatzmittel und/oder Zusatzstoffe enthalten. Weiterhin können Farbstoffe enthalten sein.

Geeignete Zusatzmittel sind beispielsweise Verzögerer, Fließmittel, Beschleuniger, Verdicker und Wasser redispergierbare Dispersionspulver.

Geeignete Verdicker sind beispielsweise Methylcellulose-Derivate, Zellulose-Ether, Stärke-Ether, Hydroxylethylcellulose-Derivate, usw..

Mit Wasser redispergierbare Dispersionspulver sind beispielsweise Vinylacetat-Vinylester-Ethylen Terpolymer, Copolymer aus Vinylchlorid-Vinyllaurat-Ethylen, Butylacrylat, Vinylacetate, Vinylversatat-terpolymer und andere.

Geeignete Fließmittel sind beispielsweise solche auf Basis von Polycarboxylat, Melaminsulfonsäure-Formaldehyd-Kondensate oder Naphthalinsulfonsäure-Formaldehyd-Kondensate oder Salze der Ligninsulfonsäure.

Geeignete Verzögerer sind Salze von Hydroxycarbonsäuren wie z.B. Citrate, Gluconate, Tartrate und andere.

Da die Sulfathüttenzemente weitaus chemikalienbeständiger als die in normalen Zementen auftretenden Calciumsilicathydrate sind, eignet sich Sulfathüttenzement auch zur Herstellung korrosionsbeständiger Betone. Sulfathüttenzement zeichnet sich nach der Hydratation im Gegensatz zu Portlandzement durch eine deutlich geringere Menge der Hydratphase Ca(OH)₂ aus. Diese Hydratphase wird in den aus Portland- oder Hochofenzement hergestellten Betonen und Mörteln leicht durch aggressive Lösungen angegriffen. Dadurch wird das Betongefüge gelockert und seine Zerstörung eingeleitet. Sulfathüttenzement-Beton dagegen ist besonders widerstandsfähig. Die Eigenschaften von Betonen und Mörteln aus Sulfathüttenzement sind im folgenden nochmals kurz zusammengefasst:
- niedrige Hydratationswärmeentwicklung
- geringes Schwinden
- hohe Endfestigkeiten
- sehr dichtes Gefüge
- hohe Widerstandsfähigkeit gegen chemischen Angriff
- verringertes Ausblühen bei der Hydratation

Die erfindungsgemäßen Bindemittelzusammensetzungen eignen sich besonders zur Herstellung von Bauteilen überall da, wo eine sichtbare Betonoberfläche vorgesehen ist. Zum Beispiel bei der Erstellung von Mauern, Steinen oder Platten zur Gestaltung der Oberfläche von Wegen, Terrassen, Plätzen oder vertikalen Bauelemente für Mauern, Eingrenzungen und ähnlichem.

Weiterhin lassen sich aus den erfindungsgemäßen Bindemittelzusammensetzungen Oberflächenbeschichtungen erstellen; wie z.B. Putze oder Beschichtungen für die vorerwähnten Bauteile. Der Vorteil bei dem Einsatz als Beschichtung für Bauteile liegt in dem erheblich verminderten Einsatz des Titandioxid. Da dieses ohnehin nur an der Oberfläche wirksam ist, nämlich dort wo Licht auftrifft, ist eine verhältnismäßig dünne Beschichtung ebenso wirksam wie eine Ausführung des gesamten Bauteiles aus der erfindungsgemäßen Bindemittelzusammensetzung.

In Fällen, bei denen die besonderen Eigenschaften von Sulfathüttenzement genutzt werden sollen, ist eine Ausführung des gesamten Bauteiles aus der erfindungsgemäßen Bindemittelzusammensetzung unter Umständen bevorzugt.

Die erfindungsgemäße Bindemittelzusammensetzung wird zur Herstellung von Bauteilen oder Beschichtungen mit Wasser angemacht. Je nach Verwendung werden in üblicher Weise Gesteinskörnungen wie Sand, Kies etc. und/oder Füller zugefügt. Die Partikelgröße der Gesteinskörnung ist an den beabsichtigten Verwendungszweck anzupassen, d.h. zur Herstellung von Bauteilen werden gröbere, zur Herstellung von Beschichtungsmassen feinere Körnungen verwendet.

Soweit Zusatzmittel in flüssiger Form vorliegen, werden diese vorzugsweise beim Anmachen zugefügt oder dem Anmachwasser beigegeben. Auch leicht lösliche Bestandteile und/oder das Titandioxid, können wahlweise den trockenen Bindemittelbestandteilen zugefügt werden oder im Anmachwasser bzw. Teilen davon gelöst werden.

Das Verhältnis von Bindemittelzusammensetzung zu Gesteinskörnung liegt typischerweise im Bereich von 1:0,3 bis 1:6. Zur Herstellung von Bauteilen werden üblicherweise Wasser/Bindemittelverhältnisse von 0,30 bis 0,70 eingestellt. Beschichtungsmassen enthalten typischerweise Wasser entsprechend einem Wasser/Bindemittelverhältnis von 0,30 bis 1,00.

Eine besonders bevorzugte Bindemittelzusammensetzung enthält 75 bis 80 Gew.-% Hüttensand, 10 bis 20 Gew.-% Calciumsulfat-Anhydrit, 0,5 bis 4,5 Gew.-% Portlandzement(klinker), 2 bis 4 Gew.-% photokatalytisch aktives Titandioxid und 0,1 bis 0,2 Gew.-% Polymerisat auf Carboxylatbasis, mit der Maßgabe, dass sich die Anteile der Bestandteile auf 100 % summieren.

Zur Herstellung von Bauteilen werden pro 1 Gew.-Teil Bindemittelzusammensetzung vorzugsweise 2 bis 6 Gew.-Teile Gesteinskörnung und 0,30 bis 0,50 Gew.-Teile Wasser zugefügt.

Zur Herstellung von Beschichtungsmassen werden pro 1 Gew.-Teil Bindemittelzusammensetzung vorzugsweise 0,4 bis 0,6 Gew.-Teile Gesteinskörnung < 2mm und 0,3 bis 0,5 Gew.-Teile Wasser zugefügt.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Die photokatalytische Aktivität wurde für verschiedene Bindemittelzusammensetzungen anhand der NOx Reduktion in einem Luftstrom bestimmt. Es wurden zwei erfindungsgemäße Bindemittelzusammensetzungen mit zwei Zusammensetzungen auf Basis eines CEM I und einer auf Basis eines CEM III verglichen. Aus 25% Bindemittelzusammensetzung und 75% Sand wurden unter Zusatz von Wasser mit einem Wasser/Bindemittel-Wert von 0,50 Massen zur Herstellung von Probekörpern erstellt. Als Bindemittelkomponenten kamen HÜS = Hüttensandmehl (HeidelbergCement AG, Deutschland), AH = Calciumsulfat-Anhydrit (HeidelbergCement AG, Deutschland) und PZ = Portlandzement (HeidelbergCement AG, Deutschland) zum Einsatz. Die Bindemittel enthielten je 2 Gew.-% bzw. 4 Gew.-% Titandioxid (Sachtleben Chemie GmbH, Deutschland). Die Massen wurden zu Platten mit einer Größe von 160mm x 140 mm x 10 mm geformt und die Probekörper anschließend für 6 Tage unter Wasser und anschließend 7 Tage bei 20°C/65%r.F. gelagert.

In einer Prüfkammer wurde ein vor gemischtes Prüfgas mit einem NOₓ-Gehalt von 0,55 ppm (0,40 ± 0,05 ppm NO + 0,15 ± 0,05 ppm NO₂) über die Probekörper geleitet. Mit einem NOₓ Analysegerät (AC32M, Fa. Environnement S.A.) wurde die NOₓ-Konzentration des Gases vor und nach der Überleitung über den Probekörper gemessen. Bei Bestrahlung der Probe mit einer 300 Watt Osram-Vitalux Daylight Lampe reduzierte sich die NOₓ-Konzentration im übergeleiteten Prüfgas um die in Tabelle 2 in der Spalte NOₓ-Reduktion angegeben Werte. Die Ergebnisse sind in Tabelle 2 aufgelistet.

**Tabelle 2**

| Bindemittelzusammensetzung [Gew.-%] | | | | | NOₓ Reduktion [%] |
|---|---|---|---|---|---|
| | HÜS | AH | PZ | TiO₂ | |
| Erfindung | 76,8 | 14,4 | 4,8 | 4,0 | 37,2 |
| Erfindung | 78,4 | 14,7 | 4,9 | 2,0 | 25,5 |
| CEM I | *.*/*.* | ./. | 96,0 | 4,0 | 18,6 |
| CEM I | ./. | ./. | 98,0 | 2,0 | 13,7 |
| CEM III | 55,0 | ./. | 41,0 | 4,0 | 14,4 |

Mit den Sulfathüttenzement basierten Mischungen wird eine höhere NOₓ Reduktion als bei Portlandzement erzielt. Selbst mit 2 % Titandioxid ist die Reduktion beim Sulfathüttenzement noch besser als bei dem CEM I und dem CEM III mit 4 % Titandioxid.

### Beispiel 2

Analog zu Beispiel 1 wurde der Einfluss eines Zusatzes von Polymerisat auf Carboxylatbasis (als PCE bezeichnet, von BASF Construction Polymers GmbH, Deutschland) anhand der NOₓ Reduktion bestimmt. Es wurde eine erfihdungsgemäße Zusammensetzung mit einer Zusammensetzung auf Basis eines CEM I und einer auf Basis eines CEM III verglichen. Die Massen zur Herstellung der Probekörper wurden aus 25 Gew.-% Bindemittel und 75 Gew.-% Sand unter Zusatz von Wasser mit einem Wasser/Bindemittel-Wert von 0,32 erstellt. Die Ergebnisse fasst Tabelle 3 zusammen.

**Tabelle 3**

| Bindemittetzusammensetzung [Gew.-%] | | | | | | NOₓ Reduktion [%] |
|---|---|---|---|---|---|---|
| | HÜS | AH | PZ | TiO₂ | PCE | |
| Erfindung | 78,4 | 14,7 | 4,9 | 2,0 | 0,2 | 46,9 |
| CEM I | ./. | ./. | 95,8 | 2,0 | 0,2 | 23,8 |
| CEM III | 14,0 | ./. | 82,0 | 4,0 | 0,2 | 28,7 |

Es ist deutlich zu erkennen, dass bei gleichem Titandioxidgehalt die Wirksamkeit einer Beschichtungsmasse auf Basis eines Sulfathüttenzementes wesentlich höher ist.

### Beispiel 3

Analog zu Beispiel 1 und 2 wurde der Einfluss von Zusatzmitteln im Vergleich mit einem CEM I anhand der NOₓ Reduktion bestimmt. Aus 53,7% Bindemittel, 1,0 % Vinylacetat-Vinylester-Ethylen Terpolymer (Vinnapas 7031 H, Wacker Polymer Systems GmbH & Co KG, Deutschland), 0,1% Methylhydroxyethylcellulose (WALOCEL MW 15000PFV, Wolff Cellulosics GmbH & Co KG, Deutschland) und 45,2 % Feinsand wurden unter Zusatz von Wasser mit einem Wasser/Bindemittel-Wert von 0,42 Massen zur Herstellung von Probekörpern erstellt. Die Bindemittel enthielten 2 bzw. 1 Gew.-% Titandioxid (Sachtleben Chemie GmbH, Deutschland). Die Ergebnisse fasst Tabelle 4 zusammen.

**Tabelle 4**

| Bindemittelzusammensetzung [Gew.-%] | | | | | NOₓ Reduktion [%] |
|---|---|---|---|---|---|
| | HÜS | AH | PZ | TiO₂ | |
| Erfindung | 78,4 | 14,7 | 4,9 | 2,0 | 48,6 |
| Erfindung | 79,2 | 14,9 | 4,9 | 1,0 | 32,8 |
| CEM I | ./. | ./. | 98,0 | 2,0 | 29,5 |

Es ist deutlich zu erkennen, dass bei gleichem Titandioxidgehalt die Wirksamkeit einer Beschichtungsmasse auf Basis eines Sulfathüttenzementes wesentlich höher ist.

## Patentansprüche

1. Hydraulische Bindemittelzusammensetzung enthaltend photokatalytisch aktives Titandioxid, **dadurch gekennzeichnet, dass** das Bindemittel ein Sulfathüttenzement ist und die Bindemittelzusammensetzung mindestens 75 Gew.-% Hüttensand, 5 bis 20 Gew.-% Calciumsulfat, 0,5 bis 4,5 Gew.-% Portlandzementklinker und 0,1 bis 5 Gew.-% Titandioxid enthält, wobei die Summe aller Komponenten, einschließlich etwaiger weiterer Komponenten, 100 Gew% beträgt.

2. Bindemittelzusammensetzung gemäß Anspruch 1, **dadurch gekennzeichnet, dass** 1 bis 5 Gew.-%, bevorzugt 1 bis 4 Gew.-%, insbesondere 1 bis 2 Gew.-% Titandioxid enthalten sind.

3. Bindemittelzusammensetzung gemäß Anspruch 1 oder 2, **dadurch gekennzeichnet, dass** das Titandioxid in der Anatas-Form, der Rutil-Form oder einer Mischung der beiden vorliegt.

4. Bindemittelzusammensetzung gemäß mindestens einem der Ansprüche 1 bis 3, **dadurch gekennzeichnet, dass** das Titandioxid eine Kristallitgröße von 5 bis 200 nm aufweist, insbesondere von 10 bis 140 nm .

5. Bindemittelzusammensetzung gemäß mindestens einem der Ansprüche 1 bis 4, **dadurch gekennzeichnet, dass** 75 bis 80 Gew.-% Hüttensand, enthalten sind.

6. Bindemittelzusammensetzung gemäß mindestens einem der Ansprüche 1 bis 5, **dadurch gekennzeichnet, dass** 10 bis 20 Gew.-%, vorzugsweise 14 bis 16 Gew.-% Calciumsulfat enthalten sind.

7. Bindemittelzusammensetzung gemäß mindestens einem der Ansprüche 1 bis 6, **dadurch gekennzeichnet, dass** 0,5 bis 3 Gew.-%, vorzugsweise 1 bis 2 Gew.-% Portlandzementklinker enthalten sind.

8. Bindemittelzusammensetzung gemäß mindestens einem der Ansprüche 1 bis 7, **dadurch gekennzeichnet, dass** Zusatzmittel, Zusatzstoffe und/oder Farbstoffe enthalten sind.

9. Verwendung einer Bindemittelzusammensetzung gemäß einem der Ansprüche 1 bis 8 zur Herstellung von Bauteilen oder Beschichtungsmassen mit photokatalytisch aktiver Oberfläche.

10. Verwendung gemäß Anspruch 9, **dadurch gekennzeichnet, dass** das Bauteil hergestellt wird, indem man die Bindemittelzusammensetzung mit Wasser in einem Wasser/Bindemittelverhältnis von 0,3 bis 0,7 zu einer Masse anmacht, die Masse in eine Form einbringt und erhärten lässt

11. Verwendung gemäß Anspruch 9, **dadurch gekennzeichnet, dass** die Beschichtungsmasse hergestellt wird, indem man die Bindemittelzusammensetzung mit Wasser in einem Wasser/Bindemittelverhältnis von 0,3 bis 1,0 anmacht und die Beschichtungsmasse auf eine zu behandelnde Oberfläche aufträgt und erhärten lässt.

12. Verwendung gemäß Anspruch 10 oder 11, **dadurch gekennzeichnet, dass** neben dem Wasser auch eine Gesteinskörnung und/oder Füller und/oder Zusatzstoffe und/oder Farbstoffe zugesetzt werden.

## Claims

1. Hydraulic binder composition containing photocatalytically active titanium dioxide, **characterized in that** the binder is a supersulfated cement and the binder composition contains at least 75 % by weight granulated blast furnace slag, 5 to 20 % by weight calcium sulphate, 0.5 to 4.5 % by weight Portland cement clinker and 0.1 to 5 % by weight titanium dioxide, wherein the amount of all compounds including possible further compounds is 100 % by weight.

2. A binder composition according to claim 1, **characterized in that** 1 to 5 % by weight, preferably 1 to 4 % by weight, particularly 1 to 2 % by weight titanium dioxide are included.

3. A binder composition according to claim 1 or 2, **characterized in that** the titanium dioxide has the anatase form, rutile form or a mixture of both.

4. A binder composition according to any one of claims 1 to 3, **characterized in that** the titanium dioxide has a crystal size of 5 to 200 nm, in particular from 10 to 140 nm.

5. A binder composition according to any one of claims 1 to 4, **characterized in that** 75 to 80 % by weight granulated blast furnace slag are contained.

6. A binder composition according to any one of claims 1 to 5, **characterized in that** 10 to 20 % by weight, preferably 14 to 16 % by weight calcium sulphate are contained.

7. A binder composition according to any one of claims 1 to 6, **characterized in that** 0.5 to 3 % by weight, preferably 1 to 2 % by weight Portland cement clinker are contained.

8. A binder composition according to any one of claims 1 to 7, **characterized in that** admixtures, additives and/or dyes are contained.

9. Use of a binder composition according to any one of claims 1 to 8 for producing of elements or coating material with photocatalytically active surface.

10. Use according to claim 9, **characterized in that** the element is prepared by turning the binder composition with water to a mass with a water/binder ratio of 0.3 to 0.7, the mass is introduced into a form and allow to harden.

11. Use according to claim 9, **characterized in that** the element is prepared by turning the binder composition with water with a water/binder ratio of 0.3 to 1.0 and the coating material applying to a surface to be treated and allow to harden.

12. Use according to claim 10 or 11, **characterized in that** next to the water also aggregates and/or fillers and/or additives and/or dyes are added.

## Revendications

1. Composition de liant hydraulique contenant du dioxyde de titane à activité photocatalytique, **caractérisée en ce que** ledit liant est un ciment sursulfaté et ladite composition de liant contient au moins 75 % en poids de laitier granulé de haut-fourneau, 5 à 20 % en poids de sulfate de calcium, 0,5 à 4,5 % en poids de clinker de ciment Portland et 0,1 à 5 % en poids de dioxyde de titane, la somme de l'ensemble des constituants, y compris d'éventuels constituants supplémentaires, étant égale à 100 % en poids.

2. Composition de liant selon la revendication 1, **caractérisée en ce qu'**elle contient 1 à 5 % en poids, de préférence 1 à 4 % en poids, notamment 1 à 2 % en poids, de dioxyde de titane.

3. Composition de liant selon les revendications 1 ou 2, **caractérisée en ce que** le dioxyde de titane se présente sous forme d'anatase, sous forme de rutile ou comme un mélange des deux.

4. Composition de liant selon au moins une des revendications 1 à 3, **caractérisée en ce que** le dioxyde de titane présente une taille des cristallites comprise entre 5 et 200 nm, notamment entre 10 et 140 nm.

5. Composition de liant selon au moins une des revendications 1 à 4, **caractérisée en ce qu**'elle contient 75 à 80 % en poids de laitier granulé de haut-fourneau.

6. Composition de liant selon au moins une des revendications 1 à 5, **caractérisée en ce qu'**elle contient 10 à 20 % en poids, de préférence 14 à 16 % en poids, de sulfate de calcium.

7. Composition de liant selon au moins une des revendications 1 à 6, **caractérisée en ce qu**'elle contient 0,5 à 3 % en poids, de préférence 1 à 2 % en poids, de clinker de ciment Portland.

8. Composition de liant selon au moins une des revendications 1 à 7, **caractérisée en ce qu'**elle contient des adjuvants, des additifs et/ou des colorants.

9. Utilisation d'une composition de liant selon l'une des revendications 1 à 8 pour fabriquer des éléments de construction ou masses de revêtement ayant une surface à activité photocatalytique.

10. Utilisation selon la revendication 9, **caractérisée en ce que** ledit élément de construction est fabriqué en gâchant ladite composition de liant avec de l'eau, le rapport eau / liant étant compris entre 0,3 et 0,7, pour ainsi obtenir une masse puis introduire ladite masse dans un moule et la laisser durcir.

11. Utilisation selon la revendication 9, **caractérisée en ce que** ladite masse de revêtement est fabriquée en gâchant ladite composition de liant avec de l'eau, le rapport eau / liant étant compris entre 0,3 et 1,0, et que l'on applique ladite masse de revêtement sur une surface à traiter pour l'y laisser durcir.

12. Utilisation selon l'une des revendication 10 ou 11, **caractérisée en ce que** l'on ajoute, outre l'eau, également un granulat et/ou des charges et/ou des additifs et/ou des colorants.
